# EUROPEAN PATENT APPLICATION

(11) **EP 4 572 182 A1**
(43) Date of publication of application: **18.06.2025**
(21) Application number: 24220313.1
(22) Date of filing: 16.12.2024
(51) Int. Cl.: H04B 7/185, H01Q 1/28

(54) **AIRCRAFT DATALINK BASED ON A TERRESTRIAL TO LEO SATELLITE CELLULAR TRANSCEIVER AND ASSOCIATED SPECTRUM**

(30) Priority: 15.12.2023 US 202318541615
(71) Applicant: Rockwell Collins, Inc., Cedar Rapids, IA 52498 (US)
(72) Inventor: MITCHELL, James P., Cedar Rapids, IA, 52411 (US)
(74) Representative: Dehns

(57) **Abstract**

An aircraft includes an antenna (202) and a radio (204). The antenna and radio establish a low-earth orbit communication link with a low-earth orbit satellite. The low-earth orbit communication link is in an L band, such as the PCS band. The antenna and radio are enclosed within the radome or within the flight deck of the aircraft to prevent requiring a supplemental type certificate. The low-earth orbit communication link is used to transmit information, such as sensor data. The aircraft is included in a communication system with the low-earth orbit satellite (104) and a ground station (108).

## Description

### TECHNICAL FIELD

The present invention generally relates to airborne stations, and more specifically to communications with or from an aircraft.

### BACKGROUND

Satellite communication is used for high-speed data communication with an aircraft. Satellite communication generally requires Ku and Ka band antennas. The Ku and Ka band antennas are several feet in size. Smaller aircraft do not have adequate fuselage space to carry the antennas necessary for high-speed Internet access. Larger aircraft may be configured with the antennas necessary for high-speed Internet access. However, the antennas necessary for high-speed Internet access are mounted through holes in the fuselage of the aircraft. Mounting the antennas through the holes in the fuselage requires supplemental type certificates (STC). The STC involve certificates for each type of aircraft involving hole in the pressurized fuselage and this process alone is very costly and may take days to install to ensure compliance.

Today there are thousands of aircraft worldwide that have no data link access in the passenger cabin. Much of the lack of data link access is related to the expense of deploying and maintaining a broadband antenna to the aircraft. External antennas on top or the bottom of the fuselage are obtrusive and contribute to air drag, icing, and require initial STC. The lack of data link access is undesirable in the information age. Therefore, it would be advantageous to provide a device, system, and method that cures the shortcomings described above.

### SUMMARY

An aircraft is described, in accordance with one or more embodiments of the present disclosure. The aircraft comprises a first antenna. The aircraft comprises a radio. The radio comprising a memory maintaining one or more program instructions and one or more processors configured to execute the one or more program instructions. The one or more program instructions cause the radio to cause the first antenna to establish a low-earth orbit communication link. The low-earth orbit communication link is in at least one of an L band, a 3GPP low band, a 3GPP mid band, or a 3GPP high band. The aircraft comprises a nose radome. The aircraft comprises a forward bulkhead. The nose radome and the forward bulkhead enclose the first antenna and the radio. The nose radome is transmissive to the low-earth orbit communication link.

In embodiments, the low-earth orbit communication link is in the L band. The low-earth orbit communication link is in a personal communication service band.

In embodiments, the low-earth orbit communication link is in a Block G portion of the personal communication service band.

In embodiments, the low-earth orbit communication link is one of the 3GPP low band, the 3GPP mid band, or the 3GPP high band. In embodiments, the first antenna is a phased array.

In embodiments, the first antenna comprises a beamwidth of 30-degrees or less.

In embodiments, the aircraft comprises a radar system. The nose radome and the forward bulkhead enclose the radar system. The first antenna and the radio are disposed above the radar system.

In embodiments, the aircraft comprises a second antenna. The radio causes the second antenna to establish an air-to-ground communication link. The nose radome and the forward bulkhead enclose the second antenna. The second antenna is disposed below the radar system.

In embodiments, the aircraft comprises an electronics equipment bay. The forward bulkhead defines an aperture. The first antenna, the radio, the second antenna, and the radar system share one or more electrical connections to the electronics equipment bay via the aperture.

In embodiments, the aircraft comprises a router. The router is communicatively coupled to the radio via one or more wired connections which are routed through the aperture and the electronics equipment bay.

In embodiments, the radio is configured to select between the first antenna and the second antenna based on a connectivity of the low-earth communication link and the air-to-ground communication link.

In embodiments, the aircraft comprises a sensor configured to generate sensor data. The radio is configured to receive the sensor data from the sensor and cause the first antenna and the second antenna to transmit the sensor data via the low-earth orbit communication link and the air-to-ground communication link.

In embodiments, at least one of the low-earth orbit communication link or the air-to-ground communication link comprise one or more Aircraft Communications Addressing and Reporting System (ACARS) messages.

In embodiments, the aircraft comprises a router and a wireless bridge. The radio is communicatively coupled to the router via the wireless bridge.

A communication system is described, in accordance with one or more embodiments of the present disclosure. The communication system comprises an aircraft. The aircraft comprises a first antenna. The aircraft comprises a radio. The radio comprising a memory maintaining one or more program instructions and one or more processors configured to execute the one or more program instructions. The one or more program instructions cause the radio to cause the first antenna to establish a low-earth orbit communication link. The low-earth orbit communication link is in at least one of an L band, a 3GPP low band, a 3GPP mid band, or a 3GPP high band. The aircraft comprises a nose radome. The aircraft comprises a forward bulkhead. The nose radome and the forward bulkhead enclose the first antenna and the radio. The nose radome is transmissive to the low-earth orbit communication link. The communication system comprises a low-earth orbit satellite. The low-earth orbit communication link is between the first antenna and the low-earth orbit satellite. The communication system comprises a ground station. The low-earth orbit satellite and the ground station are configured to communicate via a satellite-to-ground communication link.

In embodiments, the aircraft comprises a radar system. The nose radome and the forward bulkhead enclose the radar system. The first antenna and the radio are disposed above the radar system. The aircraft comprises a second antenna. The radio causes the second antenna to establish an air-to-ground communication link. The nose radome and the forward bulkhead enclose the second antenna. The second antenna is disposed below the radar system. The communication system comprising a cell tower. The air-to-ground communication link is between the second antenna and the cell tower.

In embodiments, the aircraft comprising a sensor configured to generate sensor data. The radio is configured to receive the sensor data from the sensor and cause the first antenna and the second antenna to transmit the sensor data via the low-earth orbit communication link and the air-to-ground communication link. The communication system comprising a processing center. The processing center is communicatively coupled to the cell tower and the ground station. The processing center is configured to receive the sensor data from the aircraft.

An aircraft is described, in accordance with one or more embodiments of the present disclosure. The aircraft comprises a first antenna. The aircraft comprises a radio. The radio comprising a memory maintaining one or more program instructions and one or more processors configured to execute the one or more program instructions causing the radio to cause the first antenna to establish a low-earth orbit communication link. The low-earth orbit communication link is in at least one of an L band, a 3GPP low band, a 3GPP mid band, or a 3GPP high band. The aircraft comprises a flight deck. The first antenna and the radio are disposed within the flight deck; the flight deck comprising a cockpit glass. The cockpit glass is transmissive to the low-earth orbit communication link.

In embodiments, the low-earth orbit communication link is in the L band; wherein the low-earth orbit communication link is in a personal communication service band.

In embodiments, the first antenna is a phased array; wherein the radio is configured to cause the antenna to form a beam through the cockpit glass.

### BRIEF DESCRIPTION OF THE DRAWINGS

Implementations of the concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 depicts a communication system, in accordance with one or more embodiments of the present disclosure.
FIG. 2 depicts a block diagram of an aircraft, in accordance with one or more embodiments of the present disclosure.
FIGS. 3-5 depict partial views of an aircraft, in accordance with one or more embodiments of the present disclosure.

### DETAILED DESCRIPTION OF THE INVENTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details are set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Reference will now be made in detail to the subject matter disclosed, which is illustrated in the accompanying drawings. Embodiments of the present disclosure are generally directed to an aircraft datalink based on terrestrial PCS band and LEO satellite transceiver and associated spectrum. The aircraft provides a system for reporting information using a low-cost satellite service. The aircraft includes an antenna and a radio. The antenna and radio establish a low-earth orbit communication link with a low-earth orbit satellite. The low-earth orbit communication link is in an L band, such as the PCS band. The antenna and radio are enclosed within the RF transparent radome or within the flight deck proximate of a RF transparent window of the aircraft to prevent requiring a supplemental type certificate. The low-earth orbit communication link is used to transmit various information. The aircraft is included in a communication system with the low-earth orbit satellite and a ground station.

U.S. Patent Number US9509394B1, titled "Advance mobile communications gateway with satcom backhaul access and a modularized data security system and method for data and secure key distribution to aircraft"; U.S. Patent Number US9584618B1, titled "Hybrid mobile internet system"; U.S. Patent Number US8606266B1, titled "Airborne communications network routing"; U.S. Patent Number US7187927B1, titled "Global cell phone system and method for aircraft"; U.S. Patent Number US11316261B1, titled "System and method for an aircraft communicating with multiple satellite constellations"; U.S. Patent Number US9750079B1, titled "Hybrid satellite radio system"; U.S. Patent Publication Number US20020152470A1, titled "Method and system for providing audio, video and data to devices on an aircraft"; U.S. Patent Number US9420620B2, titled "Systems and methods for aircraft on-ground determination"; U.S. Patent Number US7639175B1, titled "Method and apparatus for estimating terrain elevation using a null response"; are all useful for providing background.

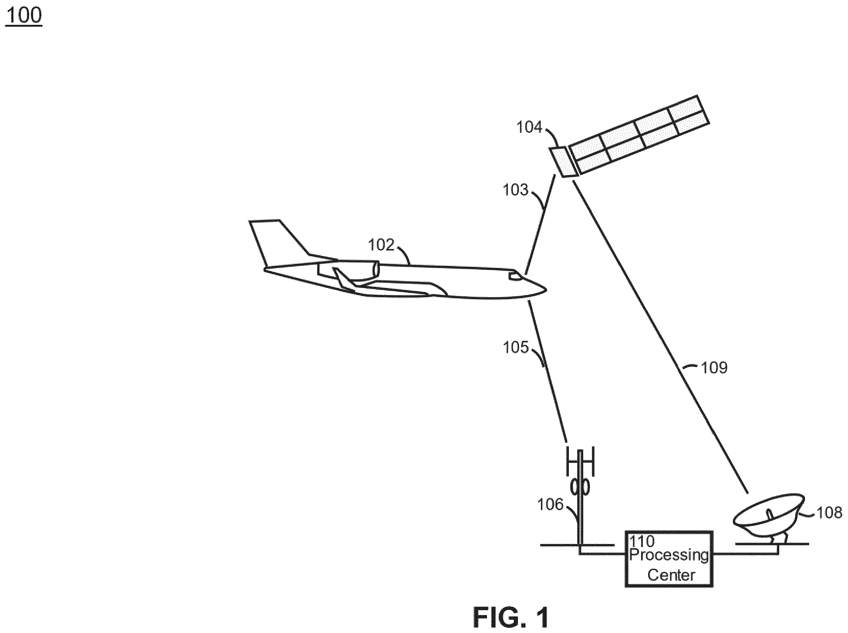

Referring to FIG. 1, a communication system 100 is described, in accordance with one or more embodiments of the present disclosure. The communication system 100 may include one or more components, such as, but not limited to, an aircraft 102, a LEO satellite 104, a cell tower 106, a ground station 108, an processing center 110, and the like.

In embodiments, the communication system 100 includes the aircraft 102. The aircraft 102 may include, but is not limited to, fixed-wing aerial vehicles (e.g., propeller-powered, jet-powered) and the like. The aircraft 102 may include may include a mobile platform such as manned (e.g., passenger, cargo, tactical, etc.) aircraft systems or other similar vehicles.

In embodiments, the communication system 100 may include the LEO satellite 104. The LEO satellite 104 is a low-earth orbit (LEO) satellite. The LEO satellite 104 may be from one or more constellations, such as, but not limited to, Starlink^{™}, Kuiper^{™}, AST's Bluewalker^{™} series, Globalstar^{™}, OneWeb^{™}, Iridium^{™}, Iridium-NEXT^{™}, LeoStella^{™}, or another LEO satellite constellation. In embodiments, the LEO satellite 104 has oceanic coverage. In embodiments, the LEO satellite 104 is part of a LEO satellite constellation which provides global coverage. The LEO satellite 104 may be considered an inverted cell network.

The aircraft 102 and the LEO satellite 104 may be configured to communicate via a LEO communication link 103. The LEO communication link 103 is a wireless communication link established by the aircraft 102 and the LEO satellite 104 transmitting and receiving radio signals. In embodiments, the LEO communication link 103 propagates between the aircraft 102 and the LEO satellite 104 by line-of-sight propagation.

The LEO communication link 103 may include a select bandwidth. For example, the select bandwidth due to limited antenna size and gain may include hundreds of megabytes per second (Mbps) peak data, or less. For instance, the select bandwidth may include tens of Mbps peak data, or less. The LEO satellite 104 may include a select bandwidth. The bandwidth provided by the LEO satellite 104 may be lower than the bandwidth provided by GEO satellite systems and may or may not be capable of providing high speed internet at desired connection speeds for all information. The miniature direct to satellite system affords a very narrow opportunity / balance between link performance and acceptable antenna size for the deployed areas identified.

The LEO communication link 103 may be in one or more bands. A band may refer to a frequency range with a bandwidth larger than a signal or channel bandwidth, in general covering several communication channels. For example, the LEO communication link 103 may be in the low-band UHF (e.g., 450-806 MHz), high band UHF (e.g., 900-952 MHz), L band (e.g., 1 to 2 GHz), Ku band (e.g., 12 to 18 GHz), Ka band (e.g., 26.5 to 40 GHz), a 3rd Generation Partnership Project (3GPP) low band (e.g., less than 1 GHz), a 3GPP mid band (e.g., 1 to 2.6 GHz, 3.5 to 6 GHz), a 3GPP high band (e.g., 24 to 40 GHz), and the like. For example, the LEO communication link 103 may be in at least one of the L band, the 3GPP low band, the 3GPP mid band, or the 3GPP high band.

In embodiments, the LEO communication link 103 may be in the L band. For example, the LEO communication link 103 may be in the personal communication service (PCS) band (e.g., 1,850 to 1,990 MHz). For instance, the LEO communication link 103 may be in the Block G portion (e.g., 1,910 to 1,915 MHz and 1,990 to 1,995 MHz) of the PCS band. Alternatively, the LEO communication link 103 may be in one of the standard 3GPP low band, 3GPP mid band, or 3GPP high bands.

In embodiments, the communication system 100 may include ground station 108. The LEO satellite 104 and the ground station 108 may be configured to communicate via a satellite-to-ground communication link 109. The satellite-to-ground communication link 109 may be in one or more bands. For example, the satellite-to-ground communication link 109 may be in the L band, Ku band, Ka band, and the like. In embodiments, the satellite-to-ground communication link 109 may be in the L band. For example, the satellite-to-ground communication link 109 may be in the personal communication service (PCS) band. For instance, the satellite-to-ground communication link 109 may be in the Block G portion of the PCS band. Although not depicted, the LEO satellite 104 may further communicate with one or more additional LEO satellites and/or one or more additional ground stations.

In embodiments, the aircraft 102 may communicate with the ground station 108 via the LEO communication link 103 and the satellite-to-ground communication link 109 by relaying through the LEO satellite 104. In this regard, the LEO satellite 104 may enable communications with or from the aircraft 102 with relaying through the LEO satellite 104.

The communication system 100 may include the cell tower 106. The cell tower 106 may include a terrestrial cell tower, a GoGo^{®} network, and the like. The aircraft 102 and the cell tower 106 may be configured to communicate via an air-to-ground link 105. The aircraft 102 may communicate with the cell tower 106 via the air-to-ground communication link 105 without relaying through a satellite.

The air-to-ground communication link 105 may be in one or more bands. For example, the air-to-ground communication link 105 may be in the L band, the Ku Band, the Ka band, the GSM band, the LTE band, a proprietary data link operating in an available air-to-ground spectrum, or other commercial air-to-ground bands. For instance, the air-to-ground communication link 105 may be a 700 MHz LTE cellular band. In this regard, the communication system 100 may be considered a L-band Digital Aeronautical Communications System (LDACS).

The LEO communication link 103, the air-to-ground link 105, and/or the satellite-to-ground communication link 109 may carry various information. For example, the LEO communication link 103, the air-to-ground link 105, and/or the satellite-to-ground communication link 109 may include a carrier wave which is modulated with an information-bearing signal. The information may be uplinked to the aircraft 102 and/or downlinked from the aircraft 102.

It is contemplated that the information may include a variety of data. For example, the information may include, text, audio, video, weather data (e.g., Aviation Routine Weather Report ("METAR"), Significant Meteorological Information ("SIGMET"), Airmen's Meteorological Information ("AIRMET"), Next-Generation Radar ("NEXRAD")), cellular data (e.g., 5G cellular data, 6G cellular data), Notice to Airmen (NOTAMs), software updates (e.g., avionics software updates), internet data, aircraft component and health monitoring data, in-flight entertainment (IFE) content (e.g., movies, audio selections, electronic games, advertisements), flight deck data, electronic flight bag data, maps, charts, flight plans, aircraft maintenance data, aircraft sensor data, aircraft operating data, aircraft warranty-related information, and the like.

In embodiments, the information may include sensor data. For example, the aircraft 102 may communicate the sensor data via the LEO communication link 103 and/or the air-to-ground link 105. In embodiments, the aircraft 102 may automatically communicate the sensor data via the LEO communication link 103 and/or the air-to-ground link 105. The aircraft 102 may report the sensor in real-time. The sensor data may be communicated to the processing center 110. In embodiments, the information may include a global positioning system (GPS) data tag. The GPS data tag may be provided in combination with the sensor data. For example, the sensor data may be tagged with the position in which the aircraft 102 was located when the sensor data was generated.

In embodiments, the communication system 100 may include processing center 110. The processing center 110 may include an air traffic controller, another aircraft data processing center, or the like. The processing center 110 may be communicatively coupled to the cell tower 106 and/or the ground station 108.

In embodiments, the aircraft 102 may communicate with the processing center 110. For example, the aircraft 102 may communicate with the processing center 110 via the LEO communication link 103 and the satellite-to-ground communication link 109 by relaying through the LEO satellite 104 and the ground station 108. By way of another example, the aircraft 102 may communicate with the processing center 110 via the air-to-ground communication link 105 by relaying through the cell tower 106.

In embodiments, the processing center 110 may receive the sensor data from the aircraft 102. For example, the processing center 110 may receive the sensor data from the aircraft 102 via the LEO communication link 103, the LEO satellite 104, the satellite-to-ground communication link 109, and the ground station 108. By way of another example, the processing center 110 may receive the sensor data from the aircraft 102 via the air-to-ground communication link 105 and the cell tower 106.

In embodiments, the LEO communication link 103, the air-to-ground communication link 105, and/or the satellite-to-ground communication link 109 may include messages such as Aircraft Communications Addressing and Reporting System (ACARS) messages, messages for systems which are derivatives of ACARS (e.g., Plain Old ACARS (POA), VHF Datalink (VDL) mode 2 ACARS over Aviation VHF Link Control (AVLC) (AOA)), or the like. At least one of the LEO communication link 103 and the air-to-ground communication link 105 may include the ACARS messages. For example, the LEO communication link 103 and the satellite-to-ground communication link 109 may include the ACARS messages. The LEO communication link 103 and the LEO communication link 103 may provide the ACARS messages between the aircraft 102 and the ground station 108 via the LEO satellite 104. By way of another example, the air-to-ground communication link 105 may include the ACARS messages. The air-to-ground communication link 105 may provide the ACARS messages between the aircraft 102 and the cell tower 106. Thus, the LEO communication link 103 and the satellite-to-ground communication link 109 and/or the air-to-ground communication link 105 may enable the aircraft 102 to connect to an ACARS network.

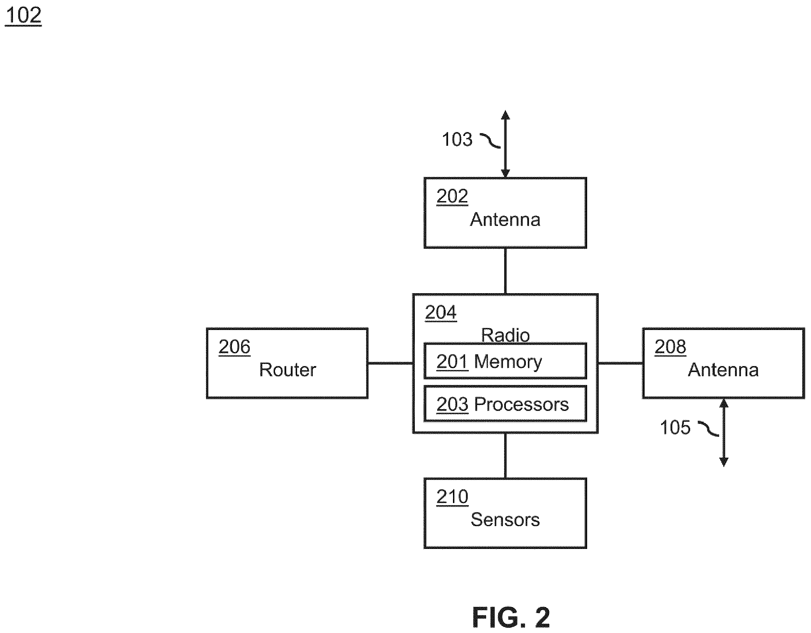

Referring now to FIG. 2, the aircraft 102 is described, in accordance with one or more embodiments of the present disclosure. The aircraft 102 may include one or more components, such as, but not limited to, an antenna 202, a radio 204, a router 206, an antenna 208, sensors 210, and the like.

In embodiments, the aircraft 102 may include the antenna 202. The antenna 202 may also be referred to as a first antenna. The antenna 202 may include any suitable type of antenna, such as, but not limited to, a phased array antenna. The antenna 202 may include reflectors and/or directors, in combination with the active elements. The antenna 202 may establish the LEO communication link 103. In this regard, the antenna 202 may also be referred to as a LEO satellite antenna. The antenna 202 may include a selected size. The antenna 202 may be one-hundred centimeters or less. For example, the antenna 202 may be sixty centimeters or less. The antenna 202 may be oriented towards the LEO satellite 104.

The antenna 202 may include a select gain. The gain of the antenna 202 may be sufficient to establish the LEO communication link 103. For example, the antenna 202 may produce a main lobe to establish the LEO communication link 103. In embodiments, the antenna 202 produces a main lobe which is directed upwards. The main lobe is directed upwards from the aircraft 102 towards the LEO satellite 104 and/or away from the cell tower 106. The main lobe may be directed upwards for both transmit and receive. The antenna 202 may be directed to the LEO satellite 104 and away from cell tower 106 such that the side lobes of the antenna 202 have a maximum radiated power below an interference limit. One challenge with implementing the antenna 202 in the PCS band is to prevent interference with the cell tower 106. The side lobes of the antenna 202 which are directed to the cell tower 106 may include the maximum radiated power below the interference limit set by one or more regulatory authorities. Thus, the antenna 202 may be prevented from interfering with signals from user equipment located on the ground which are trying to establish a cellular link with the cell tower 106. The interference limit may be based, at least in part, on a frequency of the carrier waves used in the LEO communication link 103. In this regard, the antenna 202 may be considered a directional antenna, a skyward pointing antenna, or the like. The antenna 202 may enable reuse of the PCS G-block band for the LEO communication link 103 without interfering with user equipment who use the PCS G-block band and are disposed on the ground.

The antenna 202 may include a select beamwidth. The beamwidth may refer to an angle between two points on the main lobe of the radiation pattern of the antenna 202 where the power is half of the maximum value (e.g., at -3dB point). For example, the antenna 202 may include a beamwidth of 30-degrees or less. For instance, the antenna 202 may include a beamwidth of 20-degrees or less (e.g., 10-degrees or less). It is contemplated that the beamwidth of the antenna 202 may decrease with increases in the density of the LEO constellation to which the LEO satellite 104 belongs. Lower density constellations may require the antenna 202 to include a greater beamwidth while high density constellations may require the antenna 202 to include a smaller beamwidth to establish the LEO communication link 103. The antenna has sufficient directivity and gain to establish the LEO communication link 103 with the LEO satellite 104.

In embodiments, the aircraft 102 may include the radio 204. For example, the radio 204 may include a direct digital synthesis (DDS) SDR. The radio 204 may be capable of communication using a plurality of different communication protocols over a plurality of different networks. The radio 204 may perform one or more functions. For example, the radio 204 may act as a waveform processor, performing actions such as modulation, demodulation, and the like. By way of another example, the radio 204 may include an intermediate frequency (IF) filter, performing actions such as IF filtering and the like.

The radio 204 may also be referred to as a Block G radio. The radio 204 may be capable of modulating information onto a carrier wave with a frequency in the Block G portion of the PCS band. In some embodiments, the antenna 202 and the radio 204 may be housed in a handset, a transmit/receive module, or the like. In this regard, the radio 204 may be a LEO capable cellular handset operating in the broadband cellular band Block G.

The radio 204 may include a software-defined radio. In embodiments, the radio 204 may include one or more components, such as, but not limited to, a memory 201 and one or more processors 203. The methods, operations, and/or functionality of the radio 204 may be implemented as a set of program instructions maintained on the memory 201 and executable the processors 203. The program instructions may be executed by the processors to cause the radio 204 to perform any of the various functions of the radio 204.

The memory 201 may include any storage medium known in the art. For example, the storage medium may include a non-transitory memory medium. For instance, the non-transitory memory medium may include, but is not limited to, a read-only memory (ROM), a random-access memory (RAM), a magnetic or optical memory device (e.g., disk), a solid-state drive and the like. It is further noted that memory may be housed in a common controller housing with the one or more processor(s). For example, the memory and the processor may be housed in a processing unit, a desktop computer, or the like. In an alternative embodiment, the memory may be located remotely with respect to the physical location of the processor. In another embodiment, the memory maintains program instructions for causing the processor(s) to carry out the various steps described through the present disclosure.

The processors 203 may include any processing unit known in the art. For example, the processor may include a multi-core processor, a single-core processor, a reconfigurable logic device (e.g., FPGAs), a digital signal processor (DSP), a special purpose logic device (e.g., ASICs)), or other integrated formats. Those skilled in the art will recognize that aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software/and or firmware would be well within the skill of one skilled in the art in light of this disclosure. Such hardware, software, and/or firmware implementation may be a design choice based on various cost, efficiency, or other metrics. In this sense, the processor(s) may include any microprocessor-type device configured to execute software algorithms and/or instructions. In general, the term "processor" may be broadly defined to encompass any device having one or more processing elements, which execute program instructions from memory, from firmware, or by hardware implemented functions. It should be recognized that the steps described throughout the present disclosure may be carried out by the processors.

In embodiments, the aircraft 102 may include the antenna 208. The antenna 208 may also be referred to as a second antenna. The antenna 208 may include any suitable type of antenna, such as, but not limited to, a phased array antenna. The antenna 208 may include reflectors and/or directors, in combination with the active elements. The antenna 208 may establish the air-to-ground communication link 105. In this regard, the antenna 208 may also be referred to as an air-to-ground satellite. The antenna 208 may be oriented towards the cell tower 106.

The radio 204 may be coupled to the antenna 202 and/or the antenna 208. The antenna 202 and the antenna 208 may share the radio 204. The radio 204 may control both the LEO communication link 103 and the air-to-ground communication link 105. The radio 204 may be configured to cause the antenna 202 and the antenna 208 to establish the LEO communication link 103 and the air-to-ground communication link 105, respectively. For example, the radio 204 may modulate information onto a carrier wave to be transmitted by the antenna 202 via the LEO communication link 103 and/or demodulate information from the carrier wave received by the antenna 202 via the LEO communication link 103. By way of another example, the radio 204 may modulate information onto a carrier wave to be transmitted by the antenna 208 via the air-to-ground communication link 105 and/or demodulate information from the carrier wave received by the antenna 208 via the air-to-ground communication link 105. In embodiments, the radio 204 is configured to beamform the antenna 202 and/or the antenna 208. For example, the radio 204 may vary the orientation and/or shape of the pattern of the antenna 202 and/or the antenna 208. The radio 204 may cause the antenna 202 and/or the antenna 208 to form a beam with a select gain and/or directivity. For example, the radio 204 may cause the antenna 202 to direct the main lobe at the LEO satellite 104. By way of another example, the radio 204 may cause the antenna 208 to direct the main lobe at the cell tower 106. The radio 204 may be switched between each of the functions of beamforming the antenna 202 and the antenna 208.

In embodiments, the antenna 202, the radio 204, and/or the antenna 208 may be installed on the aircraft 102 without requiring a supplemental type certificate (STC). STCs may be required from an aviation authority when modifying the fuselage of the aircraft 102. Thus, the antenna 202, the radio 204, and/or the antenna 208 may be installed on the aircraft 102 without modifying the fuselage of the aircraft 102. For example, the antenna 202, the radio 204, and/or the antenna 208 do not require external mounting hole in the fuselage. For instance, the antenna 202 is not located at a hole drilled through a top of the fuselage. By way of another instance, the antenna 208 is not located at a hole drilled through a bottom of the fuselage. The antenna 202 and/or the antenna 208 may be located at a position which enables the antenna 202 and/or to be installed without requiring modification to the fuselage. In embodiments, the antenna 202 and/or the antenna 208 may be located within a nose radome of the aircraft 102. In embodiments, the antenna 202 may be located within a flight deck of the aircraft 102. It is contemplated that the location of the antenna 202 and/or the antenna 208 may provide several advantages. For example, antenna 202 and/or the antenna 208 may be installed rapidly without requiring modification to the fuselage and/or without requiring the STC.

The radio 204 may select between the antenna 202 and the antenna 208. The radio 204 may select a lowest cost service, a low or high latency service, a highest quality service, or a highest data rate service. In embodiments, coverage data of the LEO satellite 104 may be programmed into the radio 204, enabling the radio 204 to use a cognitive algorithm process or by vector table searches correlate the position of the radio 204 with a corresponding set of satellite and/or transponder beam coverage area data for low-cost service, high or low-latency service, highest quality voice service, or highest data rate service from the satellites and/or cell towers.

In embodiments, the radio 204 may select between the antenna 202 and the antenna 208 based on a connectivity of the LEO communication link 103 and the air-to-ground communication link 105. The radio 204 may prioritize the air-to-ground communication link 105 over the LEO communication link 103 when the air-to-ground communication link 105 is available. For example, the LEO communication link 103 may be more expensive and/or have a lower bandwidth than the air-to-ground communication link 105. The radio 204 may establish the LEO communication link 103 when the air-to-ground communication link 105 is unavailable. For example, the LEO satellite-based constellation may have a higher physical coverage than the ground station-based network.

In embodiments, the radio 204 may select between the antenna 202 and the antenna 208 based on a position of the radio 204. For example, the radio 204 may select the antenna 202 to establish the LEO communication link 103 when the radio 204 is over the ocean. By way of another example, the radio 204 may select the antenna 202 to establish air-to-ground communication link 105 when over ground.

In embodiments, the radio 204 may select between the antenna 202 and the antenna 208 based on a phase-of-flight of the aircraft 102. For example, the radio 204 may disable the antenna 202 when the aircraft 102 is weight-on-wheels. The radio 204 may disable the antenna 202 when the aircraft 102 is weight-on-wheels to prevent the LEO communication link 103 from interfering with the cell tower 106.

In embodiments, the aircraft 102 may include the router 206. The router 206 may also be referred to as an aircraft interface device (AID), a switch, and the like. The router 206 may be communicatively coupled to the radio 204. The router 206 may route information to and from the radio 204. The radio 204 may exchange information from the LEO communication link 103 and/or from the air-to-ground communication link 105 with the router 206.

The router 206 may route information from the radio 204 to user equipment within the aircraft 102. Multiple of the user equipment may share one channel via the router 206. The router 206 may function as a Wi-Fi (e.g., 802.11) and/or cellular (e.g., 5G/6G) hotspot. The router 206 may enable wireless communication with one or more user equipment (UEs) aboard the aircraft 102. The router 206 may communicate in one or more bands, such as, but not limited to, 2.4 GHz, 5.8 GHz, 6 GHz, and the like. For instance, the user equipment may include a wireless communication link to the router 206 via Wi-Fi, or the like.

The router 206 may also route information from the radio 204 between individual avionics components of the aircraft 102. For example, the router 206 may route data to an onboard server, cabin and flight deck display units for displaying stored content to passengers in the aircraft cabin, and/or to aircrew on aircraft flight deck. The cabin and flight deck display units may include aircraft mounted display components and devices, or may include display screens associated with mobile electronic computing and/or communicating devices carried by the passengers or the aircrew.

In embodiments, the aircraft 102 may include one or more sensors 210. The sensors 210 may include, for example, one or more inertial measurement units, fuel sensors, airspeed sensors, location tracking sensors (e.g., GPS), lightning sensors, turbulence sensors, pressure sensors, optical systems (e.g., camera system, infrared system), weather sensors, such as outside air temperature sensors, winds at altitude sensors, INS G load (in-situ turbulence) sensors, barometric pressure sensors, humidity sensors, or any other aircraft sensors or sensing system that may be used to monitor the performance of an aircraft or weather local to the aircraft. The sensors 210 may include one or more sensors configured to acquire air data indicative of at least one air characteristic (e.g., a pressure, an indicated airspeed, a true airspeed, an angle of attack, a pitch angle, an altitude, a temperature) of an environment surrounding the aircraft. The sensors 210 may be configured to acquire more than one type of sensor data. The sensors 210 may further include one or more sensors configured to measure various aircraft flight parameters (e.g., the weight of the aircraft). In embodiments, the sensors 210 may generate latitude data, longitude data, altitude data, course data, speed heading data, and the like. In embodiments, the sensors 210 may include at least one of a GPS, a Global Navigation Satellite System (GNSS), an altitude heading and reference system (AHRS), and an inertial reference system (IRS). The sensors 210 may be configured to acquire flight data indicative of at least one flight characteristic of the aircraft 102. The flight characteristics may include, for example, a position (e.g., latitude, longitude), altitude, course, speed (e.g., ground speed, vertical speed), and/or heading of the aircraft.

The sensors 210 may be located anywhere within the aircraft 102. For example, the sensors 210 may be located on the wings, on the wing tips of the wings, the fuselage, within the radio 204, or the like. In embodiments, the sensors 210 may be parasitically powered by one or more components of the aircraft 102. In embodiments, the sensors 210 may be powered by components having power or energy harvesting capabilities. In embodiments, the sensors 210 may be powered by the wing lighting system. For instance, the sensors 210 may be powered by the aviation lighting system on the wing tips.

The sensors 210 may be communicatively coupled to the radio 204. For example, the sensors 210 may be communicatively coupled to the radio 204 via a wired connection, a wireless connection, or the like. In embodiments, the sensors 210 may be wired or wirelessly deployed anywhere on the aircraft 102. For example, the sensors 210 may be communicatively coupled to the radio 204 via a wired link (as depicted) or a wireless link. For instance, the wireless link may include a wireless link in a 5G millimeter wave band. The radio 204 may receive the sensor data from the sensors 210. The radio 204 may also cause the antenna 202 and/or the antenna 208 to transmit the sensor data via the LEO communication link 103 and/or the air-to-ground communication link 105, respectively. Thus, sensor data of the aircraft 102 may be automatically reported via this LEO communication link 103 and/or the air-to-ground communication link 105. The sensor data may be downlinked automatically (tagged with Geolocation data obtained from the aircraft) without requiring action from the pilots of the aircraft 102. For example, the pilots do not need to communicate the sensor data using voice or text over a controller pilot data link communication (CPDLC) when the sensor data may be downlinked automatically.

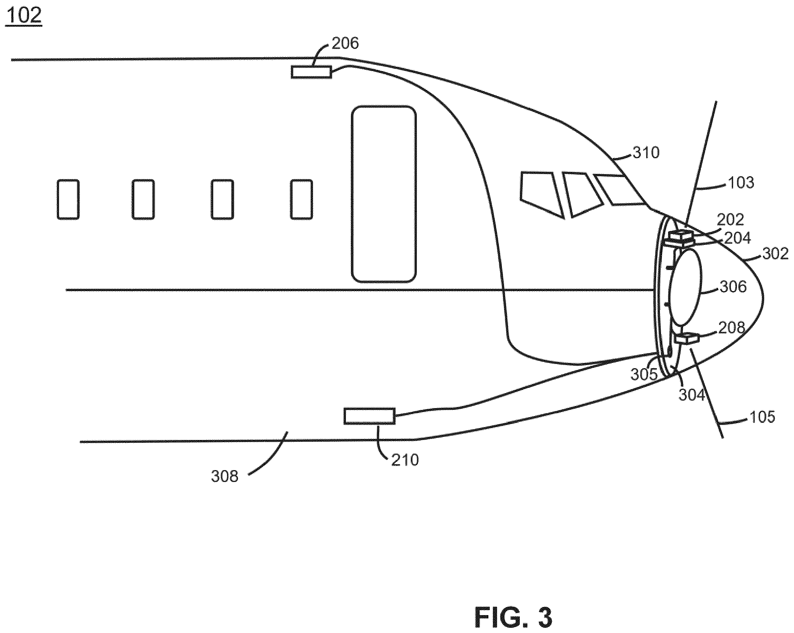

Referring now to FIG. 3, the aircraft 102 is described, in accordance with one or more embodiments of the present disclosure. The aircraft 102 may include any of the components previously described. The aircraft 102 may further include one or more additional components, such as, but not limited to, a nose radome 302, a forward bulkhead 304, a radar system 306, an electronic equipment bay 308, a flight deck 310, and the like.

In embodiments, the aircraft 102 may include the nose radome 302. The nose radome 302 may include a sandwich construction (e.g., A-sandwich, C-sandwich), a dielectric space frame, and the like. The nose radome 302 may be transmissive to one or more bands of electromagnetic radiation. The nose radome 302 may be transmissive to the LEO communication link 103 and/or the air-to-ground link 105. For example, the nose radome 302 may be transmissive to the bands used by the antenna 202, the antenna 208, the radar system 306, and the like. The nose radome 302 may be made of any material that is transparent to the bands. For example, the nose radome 302 may be made of a composite material, or the like. In embodiments, the nose radome 302 may include a contoured shape.

In embodiments, the aircraft 102 may include the forward bulkhead 304. The nose radome 302 may be pivotably coupled to the forward bulkhead 304. The forward bulkhead 304 may separate the nose radome 302 from the flight deck 310.

In embodiments, the nose radome 302 and the forward bulkhead 304 may enclose the antenna 202, the radio 204, the antenna 208, and/or the radar system 306. For example, the antenna 202, the radio 204, the antenna 208, and/or the radar system 306 may be coupled to the forward bulkhead 304. In embodiments, the LEO communication link 103 and/or the air-to-ground communication link 105 may pass through the nose radome 302.

The forward bulkhead 304 may define an aperture 305. The aperture 305 may be used to route one or more wires between the electronic equipment bay 308 and one or more of the antenna 202, the radio 204, the antenna 208, and/or the radar system 306.

In embodiments, the aircraft 102 may include the radar system 306. The nose radome 302 and the forward bulkhead 304 may enclose the radar system 306. The radar system 306 may be oriented in a forward direction (e.g., towards the heading of the aircraft 102). The radar system 306 may be a weather radar system. The diameter of the radar system 306 may be from 10 to 30 inches, or more. The radar system 306 may include a mechanically steerable radar system 306, an electronically steerable phased-array radar system, or the like.

The radar system 306 may operate within one or more bands. In embodiments, the radar system 306 may operate within the X-band (e.g., 8 to 12 GHz). For example, the radar system 306 may operate from 9.4 to 9.5 GHz, although this is not intended to be limiting. In embodiments, the antenna 202, the antenna 208, and/or the radar system 306 are non-interfering. For example, the antenna 202 and/or the antenna 208 may not interfere with the radar system 306. Thus, the LEO communication link 103 and/or the air-to-ground communication link 105 may not interfere with the radar system 306.

The nose radome 302 and the forward bulkhead 304 may enclose the antenna 202 and the radio 204. In embodiments, the antenna 202 and/or the radio 204 may be disposed above the radar system 306. For example, the antenna 202 and/or the radio 204 may be mechanically coupled to the forward bulkhead 304 above the radar system 306. For instance, the radio 204 may be coupled to the forward bulkhead 304. The antenna 202 may be disposed on and mechanically coupled to the radio 204. The location above the radar system 306 may be too small for full-size Ka band or Ku band antennas. For example, a curve of the nose radome 302 may limit the volume available for implementing such antennas. However, the location above the radar system 306 may be sufficiently large for L band antennas. For instance, the antenna 202 may be an L band antenna which is dimensioned to fit above the radar system 306.

In embodiments, the nose radome 302 may provide an upwards view for the LEO communication link 103. The nose radome 302 may provide the upwards view for the LEO communication link 103 given the geometry of the nose radome 302 and internal area between the nose radome 302 and the forward bulkhead 304.

The nose radome 302 and the forward bulkhead 304 may enclose the antenna 208. In embodiments, the antenna 208 may be disposed below the radar system 306. For example, the antenna 208 may be mechanically coupled to the forward bulkhead 304 below the radar system 306. The aircraft 102 may have enough lateral room under the radar system 306 to deploy the antenna 208. For instance, the antenna 208 may be a Ka band antenna measuring between one and two feet.

The forward bulkhead 304 may or may not be transmissive to the bands of the antenna 202 and/or the antenna 208. For example, the forward bulkhead 304 may block the LEO communication link 103 and/or the air-to-ground communication link 105. The forward bulkhead 304 may function as an RF absorber. The radio 204 may cause the antenna 202 form beams which are oriented upwards and in the heading of the aircraft 102 which are not blocked by the forward bulkhead 304. Thus, the antenna 202 may have one or more beams which are in view of the LEO satellite 104. Similarly, the radio 204 may cause the antenna 208 to form beams which are oriented downwards and in the heading of the aircraft 102 which are not blocked by the forward bulkhead 304. Thus, the antenna 208 may have one or more beams which are in view of the cell tower 106. The forward bulkhead 304 may eliminate receive or transmit sidelobes of the antenna 202 and/or the antenna 208 from passing to the flight deck 310.

Coupling the antenna 202 and/or the radio 204 to the forward bulkhead 304 above the radar system 306 and/or coupling the antenna 208 below the radar system 306 may provide one or more co-location benefits. For example, the antenna 202, the radio 204, and/or the antenna 208 may share electrical connections with the radar system 306. In embodiments, the antenna 202, the radio 204, the antenna 208, and/or the radar system 306 may share one or more electrical connections to the electronic equipment bay 308 via the aperture 305. For example, the wires may be routed to the antenna 202, the radio 204, the antenna 208, and/or the radar system 306 from the electronic equipment bay 308 via the aperture 305. The electrical connections may include input/output, power, heater cables, and the like. The electrical connections may be further routed within the electronic equipment bay 308 for flight deck and cabin data routing. Sharing the electrical connections may lower install cost and/or remove a need to get a supplemental type certificate for the antenna 202, the radio 204, and/or the antenna 208. For example, the antenna 202, the radio 204, and/or the antenna 208 do not require additional holes to the electronic equipment bay 308.

In embodiments, the aircraft 102 may include the electronic equipment bay 308. The electronic equipment bay 308 may include one or more components, such as, but not limited to, Display Electronic Units, Automatic Direction Finders (ADF), Radio Altimeters, Digital Flight Data Acquisition Units (DFDAU), Engine Vibration Signals, Conditioners, Engine Acceleration Units, Audio Entertainment Players, Stall Management Yaw Damper, Zone Temp Controls, Wireless Quick Access Recorders, Very High Frequency Radios, Auxiliary Battery Chargers, Air Conditioner Relays, Remote Electronic Unit, Selective Calling Systems, Aircraft Communications Addressing And Reporting System (ACARS) Communications Management Unit (CMU), VHF OmniDirectional Range (VOR), Head Up Guidance Computers, Network File Servers, Window Heat Controls, Transformer Rectifiers, Bus Power Control Units, Gen E Power Control Units, Power Distribution Panels, Battery Chargers, Air Data Inertial Reference Units (ADIRU), Flight Management Computers (FMC), Relays, Video System Controllers, General Control Units, Transformers, Main Battery Chargers, Engine / Auxiliary Power Units (APU) Fire Det Unit, Cabin Pressure Controls, APU Start Converter Units, Power Distribution Panels, Enhanced Ground Proximity Warning Systems (EGPWS), Cabin Pressure Systems, Integrated Flight Systems, Flap Slat Electronic Units (FSEU), Traffic Collision Avoidance Systems (TCAS), Distance Measuring Equipment (DME), MultiMode Receivers (MMR), Transponders, Antiskid Autobrakes, Power Amplifier, And The Like.

In embodiments, the radio 204 may be communicatively coupled to the router 206. For example, the radio 204 may be communicatively coupled to the router 206 via one or more wired connections. For instance, the radio 204 may be communicatively coupled to the router 206 via one or more wired connections which are routed through the aperture 305 and the electronics equipment bay 308.

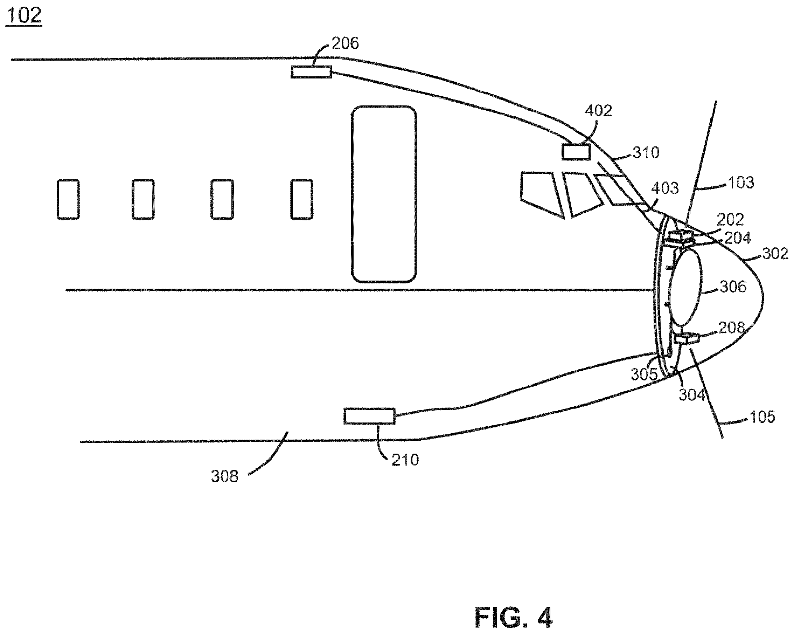

Referring now to FIG. 4, the aircraft 102 is described, in accordance with one or more embodiments of the present disclosure. The aircraft 102 may include any of the components previously described. In embodiments, the aircraft 102 may further include one or more additional components, such as a wireless bridge 402. Although the radio 204 is described as communicatively coupled to the router 206 via one or more wired connections, this is not intended as a limitation of the present disclosure. In embodiments, the radio 204 may be communicatively coupled to the router 206 via the wireless bridge 402. For example, the radio 204 may be communicatively coupled to the wireless bridge 402 via a wireless link 403. The wireless link 403 may be a mm-wave link. For example, the wireless link 403 may include a carrier wave at 6 GHz, 60 GHz, or another approved frequency. The wireless bridge 402 may include a mm-wave antenna and radio enabling the wireless link 403. The wireless bridge 402 may be installed in or more locations, such as, but not limited to, the flight deck 310. The wireless link 403 may pass from the radio 204 through the forward bulkhead 304 to the wireless bridge 402. The wireless bridge 402 may be desirable to eliminate wires in the electronic equipment bay 308. Thus, the radio 204 may include a wireless connection to the router 206 via the wireless bridge 402.

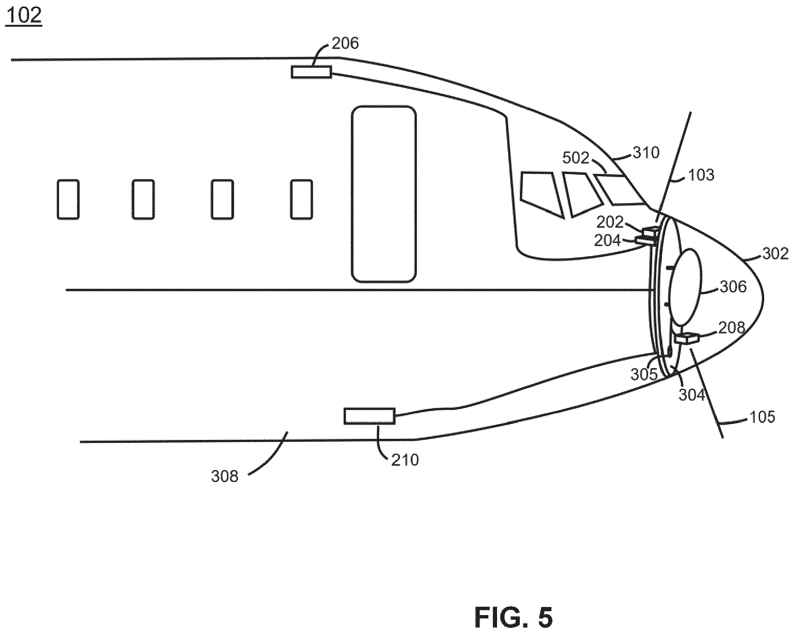

Referring now to FIG. 5, the aircraft 102 is described, in accordance with one or more embodiments of the present disclosure. The aircraft 102 may include any of the components previously described. Although the antenna 202 and/or the radio 204 are described as being enclosed by the nose radome 302 and the forward bulkhead 304, this is not intended as a limitation of the present disclosure. In embodiments, the antenna 202 and/or the radio 204 may be disposed within the flight deck 310. For example, the antenna 202 and/or the radio 204 may be coupled to the forward bulkhead 304 within the flight deck 310.

The flight deck 310 may include the cockpit glass 502. The cockpit glass 502 may also be referred to as a flight deck window, a pilot window, or the like. The cockpit glass 502 may have an angle providing an upward view to the LEO satellite 104. The cockpit glass 502 may be transmissive to the LEO communication link 103. The antenna 202 and/or the radio 204 may be disposed below the cockpit glass 502. In embodiments, the radio 204 may cause the antenna 202 form a beam through the cockpit glass 502. The LEO communication link 103 may pass through the cockpit glass 502 of the flight deck 310 between the antenna 202 and the LEO satellite 104.

Referring generally again to the figures. In embodiments, the aircraft 102 may include one or more heaters (not depicted). The one or more heaters may heat the antenna 202, the radio 204, and/or the antenna 208.

In embodiments, the aircraft 102 may include one or more power supplies (not depicted). The one or more power supplies may be coupled to any of the various components of the aircraft 102 for supplying power to the components, such as, but not antenna 202, the radio 204, and/or the antenna 208.

Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented. It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made within the scope of the invention as defined by the claims.

## Claims

1. An aircraft comprising:
a first antenna (202);
a radio (204); the radio comprising a memory (201) maintaining one or more program instructions and one or more processors (203) configured to execute the one or more program instructions causing the radio to:
cause the first antenna to establish a low-earth orbit communication link; wherein the low-earth orbit communication link is in at least one of an L band, a 3GPP low band, a 3GPP mid band, or a 3GPP high band;
a nose radome (302); and
a forward bulkhead (304); wherein the nose radome and the forward bulkhead enclose the first antenna and the radio; wherein the nose radome is transmissive to the low-earth orbit communication link.

2. The aircraft of claim 1, wherein the low-earth orbit communication link is in the L band; wherein the low-earth orbit communication link is in a personal communication service band, and optionally wherein the low-earth orbit communication link is in a Block G portion of the personal communication service band; or wherein the low-earth orbit communication link is one of the 3GPP low band, the 3GPP mid band, or the 3GPP high band.

3. The aircraft of any preceding claim, wherein the first antenna comprises a beamwidth of 30-degrees or less.

4. The aircraft of any preceding claim, comprising a radar system (306); wherein the nose radome and the forward bulkhead enclose the radar system; wherein the first antenna and the radio are disposed above the radar system.

5. The aircraft of claim 4, comprising a second antenna (208); wherein the radio causes the second antenna to establish an air-to-ground communication link; wherein the nose radome and the forward bulkhead enclose the second antenna; wherein the second antenna is disposed below the radar system.

6. The aircraft of claim 5, comprising an electronics equipment bay (308); wherein the forward bulkhead defines an aperture (305); wherein the first antenna, the radio, the second antenna, and the radar system share one or more electrical connections to the electronics equipment bay via the aperture.

7. The aircraft of claim 6, comprising a router (206); wherein the router is communicatively coupled to the radio via one or more wired connections which are routed through the aperture and the electronics equipment bay.

8. The aircraft of claim 5, 6 or 7, wherein the radio is configured to select between the first antenna and the second antenna based on a connectivity of the low-earth communication link and the air-to-ground communication link.

9. The aircraft of any of claims 5 to 8, comprising a sensor (210) configured to generate sensor data; wherein the radio is configured to receive the sensor data from the sensor and cause the first antenna and the second antenna to transmit the sensor data via the low-earth orbit communication link and the air-to-ground communication link.

10. The aircraft of any of claims 5 to 9, wherein at least one of the low-earth orbit communication link or the air-to-ground communication link comprise one or more Aircraft Communications Addressing and Reporting System, ACARS, messages.

11. The aircraft of claim 1, comprising a router (206) and a wireless bridge (402); wherein the radio is communicatively coupled to the router via the wireless bridge.

12. An aircraft comprising:
a first antenna (202);
a radio (204); the radio comprising a memory (201) maintaining one or more program instructions and one or more processors (203) configured to execute the one or more program instructions causing the radio to:
cause the first antenna to establish a low-earth orbit communication link; wherein the low-earth orbit communication link is in at least one of an L band, a 3GPP low band, a 3GPP mid band, or a 3GPP high band; and
a flight deck (310); wherein the first antenna and the radio are disposed within the flight deck; the flight deck comprising a cockpit glass (502); wherein the cockpit glass is transmissive to the low-earth orbit communication link.

13. The aircraft of any preceding claim, wherein the low-earth orbit communication link is in the L band; wherein the low-earth orbit communication link is in a personal communication service band.

14. The aircraft of any preceding claim , wherein the first antenna is a phased array.

15. A communication system comprising:
an aircraft (102) as claimed in any preceding claim;
a low-earth orbit satellite (104); wherein the low-earth orbit communication link is between the first antenna and the low-earth orbit satellite; and
a ground station (108); wherein the low-earth orbit satellite and the ground station are configured to communicate via a satellite-to-ground communication link.
